# EUROPÄISCHE PATENTSCHRIFT

(11) **EP 3 695 486 B1**
(45) Veröffentlichungstag und Bekanntmachung des Hinweises auf die Patenterteilung: **10.11.2021**
(21) Anmeldenummer: 18778454.1
(22) Anmeldetag: 25.09.2018
(51) Int. Cl.: H02K 1/27

(54) **ELEKTRISCHE MASCHINE MIT EINEM LAMELLENPAKET ZUR FIXIERUNG EINES MAGNETEN SOWIE EIN LAMELLENPAKET ZUR VERWENDUNG BEI EINER SOLCHEN MASCHINE**
ELECTRIC MACHINE HAVING A LAMELLAR STACK FOR FIXING A MAGNET AND A LAMELLAR STACK FOR USE IN SUCH A MACHINE
MACHINE ÉLECTRIQUE COMPRENANT UN PAQUET DE LAMELLES POUR FIXER UN AIMANT ET PAQUET DE LAMELLES DESTINÉ À ÊTRE UTILISÉ AVEC UNE TELLE MACHINE

(30) Priorität: 13.10.2017 DE 102017218408
(43) Veröffentlichungstag der Anmeldung: 19.08.2020
(73) Patentinhaber: Volkswagen Aktiengesellschaft, 38440 Wolfsburg (DE)
(72) Erfinder: WETTERAU, Lars, 85049 Ingoldtadt (DE)
(86) Internationale Anmeldenummer: PCT/EP2018/075893
(87) Internationale Veröffentlichungsnummer: WO 2019/072538

(56) Entgegenhaltungen:
- DE-A1-102013 226 379
- DE-A1-102014 225 260
- DE-A1-102015 216 051

## Beschreibung

Elektrische Maschine mit einem Lamellenpaket zur Fixierung eines Magneten sowie Verwendung eines Lamellenpakets bei einer solchen Maschine Die Erfindung betrifft eine elektrische Maschine, insbesondere eine elektrische Antriebsmaschine eines Kraftfahrzeuges, mit einem aus einer Vielzahl von übereinander geschichteten, als Blechzuschnitt ausgeführten Lamellen gebildeten Lamellenpaket, insbesondere für einen Rotor der elektrischen Maschine, wobei das Lamellenpaket zumindest eine Ausnehmung zur Fixierung zumindest eines Magneten aufweist, wobei mehrere der übereinander geschichteten Lamellen mit einem jeweiligen Vorsprung ausgestattet sind, welcher einen elastisch verformbaren, durch eine Abbiegung und/oder Abwinkelung gebildeten Halteabschnitt aufweist, der in den Bereich der Ausnehmung reicht und deren Umfangskontur bzw. Querschnittsfläche begrenzt, sodass der Magnet in der Ausnehmung kraft- und/oder formschlüssig fixiert ist. Weiterhin betrifft die Erfindung ein aus einer Vielzahl von übereinander geschichteten Lamellen gebildetes Lamellenpaket zur Verwendung bei einer solchen elektrischen Maschine.

Elektrische Maschinen mit derartigen Lamellenpaketen werden als Elektromotoren häufig im Kraftfahrzeugbereich beispielsweise als Lenkungsmotoren oder in Stellantrieben, eingesetzt.

Permanentmagneterregte elektrische Maschinen weisen im Wesentlichen einen Primärteil und einen Sekundärteil auf, welche durch einen Luftspalt voneinander beabstandet sind. Das Primärteil ist diejenige Komponente, welche eine bestrombare ein- oder mehrphasige Wicklung aufweist. Das Sekundärteil weist Permanentmagnete auf, welche die Erregerpole zur Bildung des magnetischen Erregerfeldes aufweisen.

Bei rotatorisch ausgeführten Maschinen ist das Primärteil als Stator mit einer Wicklung und das Sekundärteil als Rotor mit Permanentmagneten ausgebildet. Stator und Rotor sind i. d. R. zur Reduktion von Wirbelstromverlusten mittels Blechpaketen, bestehend aus einer Vielzahl an einzelnen Elektroblechen, gebildet. Der Rotor ist beispielsweise auf eine Stahlwelle aufgepresst.

Der Rotor weist Permanentmagnete auf, die entweder im Inneren des Rotors oder an der dem Stator zugewandten Oberfläche des Rotors angeordnet sind und die dauerhaft fixiert werden, um die mechanischen Kräfte bei dynamischen und statischen Belastungen im Betrieb der elektrischen Maschine zu beherrschen und die Permanentmagnete vor Beschädigungen zu schützen. Die Magnete können beispielsweise durch Klemmung oder Verklebung am Lamellenpaket des Rotors gehalten sein.

Aus der DE 100 09 151 C2 ist es bekannt, bei einem Synchronmotor stirnseitig am Rotor angebrachte Klemmelemente vorzusehen, die zunächst radial aus dem Blechpaket herausragen und nach Einsetzen der Magnete in eine axiale Ausrichtung umgebogen werden, um mit diesen axial abgebogenen Ende in Ausnehmungen der Magnete einzugreifen.

Aus der DE 10 2007 015 249 A1 ist es bekannt, Magnete mittels zusätzlichen, auf die einander gegenüberliegenden Stirnseiten aufsetzbare Halteelemente zu fixieren. Hierzu greifen achsparallele Klemmelemente jeweils in eine Nut ein.

Aus der DE 103 57 502 A1 ist ein Rotor bekannt, der sich in axialer Richtung aus einem Blechpaket aus identisch geformten Einzelblechen zusammensetzt, wobei in Aufnahmetaschen des Rotors eingesetzte Magnete mittels an den Schmalseiten der Aufnahmetaschen vorgesehenen Vorsprüngen gehalten sind.

Bei dem aus der DE 10 2007 029 719 A1 bekannten Blechpaket tragen Taschenöffnungen von Einzelblechen an beiden Schmalseiten.

Bei einem Blechpaket gemäß der EP 2 436 100 B1 wird eine zuverlässige Fixierung der Magnete dadurch sichergestellt, dass bei einer Vielzahl von übereinander gestapelten Einzelbleche eine Anzahl von Taschenöffnungen mit angeformten Klemmlaschen zur Klemmfixierung der Magnete die einzelnen Klemmlaschen an gegenüberliegenden Öffnungsseiten vorgesehen sind.

Aus der US 5,581,140 sind Aufnahmetaschen mit Klemmlaschen zur Klemmfixierung der Magnete bekannt, wobei die Klemmlaschen nur in jeder dritten oder vierten Blechlage vorgesehen sind.

Aus der DE 10 2015 216 051 A1 ist ein Rotor für eine elektrische Maschine bekannt, der Haltetaschen für Magnete umfasst, wobei wenigstens ein in die Haltetasche hineinragender Biegeschenkel zum Befestigen der Magnete vorhanden ist. Der Biegeschenkel kann in dem Kontaktbereich zum Magneten einen Radius aufweisen.

Aus der DE 10 2014 225 260 A1 ist ein Blechpaket für einen Rotor einer elektrische Maschine bekannt, das über den Umfang des Blechpakets verteilte Taschen zur Aufnahme von Permanentmagneten aufweist, wobei jede Tasche zumindest ein federndes Halteelement aufweist, das in die Tasche vorsteht.

Weiterhin ist aus der DE 10 2013 226 379 A1 ist ein Speichenrotor für eine elektrische Maschine bekannt, mit einer Klemmlamelle, welche mehrere in eine axiale Einführrichtung gebogene Klemmelemente zur Fixieren der Magnete aufweist. Die Klemmelemente haben in erstrecken sich bogenförmig in die Einführrichtung und weisen etwa die Forme einer Halbwelle auf. Die sich axial erstreckende Randbereiche der Klemmelemente sind im direkten Kontakt mit den Magneten.

Aufgrund der mechanischen Fixierung der Permanentmagnete in dem Blechpaket kommt es aufgrund des beim Einbringen der Stanzkontur in die Einzelbleche unvermeidlichen Stanzgrates oftmals zu einer Beschädigung der Magnetoberfläche, da die Magnete während und/oder nach der Montage im direkten Kontakt mit den - den Stanzgrat aufweisenden - Randbereichen der Halteelemente.

Es sind auch Fixierungen der Permanentmagnete in dem Blechpakte mittels geeigneter Haftverbindungen, beispielsweise durch Klebstoffe oder durch Bandagenmaterial, bekannt. Der Spalt bzw. Hohlraum zwischen Tasche und Permanentmagnet wird mit einem Tränkharz vergossen.

Durch die beschriebene Vorgehensweise ist jedoch keine definierte Lage bzw. Position des Permanentmagneten in der Tasche gewährleistet, wodurch Unsymmetrien in den elektrischen oder magnetischen Größen, beispielsweise dem Verlauf der Magnetfelder der Permanentmagnete, auftreten können. Die nicht definierte Lage der Permanentmagnete in den Taschen kann sich auch negativ auf die Wuchtgüte des Rotors auswirken.

Weiterhin kann der Magnet zum Schutz seiner Oberfläche mit einem geeigneten Kunststoffmaterial umspritzt werden.

Vor diesem Hintergrund liegt der Erfindung die Aufgabe zugrunde, bei einer elektrischen Maschine der eingangs genannten Art die Fixierung des Magneten in dem Lamellenpaket wesentlich zu verbessern. Weiterhin soll ein zur Verwendung bei der elektrischen Maschine bestimmtes Lamellenpaket mit einer verbesserten Fixierung des Magneten geschaffen werden.

Die erstgenannte Aufgabe wird gelöst mit einer elektrischen Maschine gemäß den Merkmalen des Patentanspruches 1. Die Unteransprüche betreffen besonders zweckmäßige Weiterbildungen der Erfindung.

Erfindungsgemäß weist der Halteabschnitt eine gegenüber der Haupterstreckungsebene des abgewinkelten und/oder abgebogenen Halteabschnittes in Richtung der Ausnehmung gegenüber einem umfangsseitigen Randbereich des Halteabschnittes vorspringende Ausformung auf, welche die Umfangskontur oder Querschnittsfläche begrenzt. Die Erfindung geht von der Erkenntnis aus, dass eine mechanische Fixierung des Magneten dann ohne das Risiko einer Beschädigung der Oberfläche des Magneten realisiert werden kann, wenn der Kontaktbereich des Halteabschnittes beabstandet von dessen Randbereich, insbesondere also von dessen Stanzgrat, und zugleich gegenüber der Ebene, die durch die Umfangskontur des Halteabschnittes bestimmt ist, hervortritt, also in Richtung auf den zu fixierenden Magneten hervorgehoben ist. In überraschend einfacher Weise ist es somit entbehrlich, die Stanzgrate der Halteabschnitte zu entfernen, was in der Praxis zu einem erheblichen zusätzlichen Fertigungsaufwand führen würde. Vielmehr dient die Ausformung dazu, die Kontaktfläche von der Ebene der Stanzgrate räumlich zu trennen, um so den unerwünschten Kontakt mit der Oberfläche des Magneten zuverlässig zu verhindern. Dadurch kann auf eine Beschichtung der Magnetoberfläche ebenso wie auf einen durch ein Adhäsionsmittel zu füllenden Spalt zwischen der Ausnehmung und dem Magneten verzichtet und dessen Positionierungsgenauigkeit verbessert werden. Der Abstand entspricht daher zumindest der Höhe der in der Praxis maximal auftretenden Gratbildung, beispielsweise zumindest 0,2mm, vorzugsweise mehr als 0,5mm.

Die Ausformung könnte durch eine abweichende Materialstärke oder durch Auftragen einer Materialschicht bzw. einer Beschichtung erreicht werden. Besonders vorteilhaft ist hingegen eine Ausgestaltungsform der Erfindung, bei welcher der Halteabschnitt eine zumindest im Wesentlichen konstante Materialstärke aufweist und bei der die Ausformung in Richtung der Ausnehmung bzw. der Oberfläche des Magneten zumindest abschnittsweise konvex ausgeformt ist. Hierdurch wird in besonders einfacher Weise eine von dem Randbereich beabstandete Kontaktfläche mit dem Magneten geschaffen, die zudem aufgrund der konvexen, beispielsweise abschnittsweise sphärischen Krümmung, die Montage des Magneten vorzugsweise durch eine elastische Verformung des Halteabschnittes wesentlich vereinfacht. So kann der Halteabschnitt beispielsweise eine Löffelform aufweisen.

Eine besonders bevorzugte Ausgestaltungsform der Erfindung wird auch dadurch erreicht, dass die Ausformung durch eine Umformung, beispielsweise durch 3D-Biegung, Pressen oder Tiefziehen, zumindest eines von dem Randbereich eingeschlossenen Teilbereiches des Halteabschnittes gebildet ist. Hierdurch lässt sich die mit dem Halteabschnitt ausgestattete Lamelle mit geringem Aufwand durch Stanzen und einen anschließenden oder integrierten Umformprozess herstellen. Insbesondere wird dadurch der Herstellungsaufwand in lediglich geringem Umfang erhöht. Vorzugsweise wird dabei in der Praxis die Ausformung durch Druckumformen, insbesondere Drücken oder Prägen, gebildet ist.

Die Ausformung könnte der gesamten Fläche des Halteabschnittes entsprechend, sodass in vorteilhafter Weise auch der Stanzgrat in eine dem späteren Kontaktbereich mit dem Magneten abgewandte Richtung verformt werden kann. Vorzugsweise hat die Ausformung eine im Wesentlichen polygonale, beispielsweise rechteckige Umfangskontur, um so eine ausreichend große Kontaktfläche mit dem Magneten zu ermöglichen. Der Halteabschnitt ist dabei vorzugsweise als ein rechteckiger Vorsprung mit konstanter Breite ausgeführt.

Die Ausformung könnte eine ausschließlich gewölbte Oberflächenkontur aufweisen, um so auch die Montage des Magneten zu vereinfachen. Besonders bevorzugt weist die Ausformung eine gegen den Magneten anlegbare ebene Kontaktfläche auf. Hierdurch wird eine ausreichend große Kontaktfläche an dem Magneten und dadurch eine sichere und positionsgenaue Fixierung erreicht. Darüber hinaus lässt sich durch eine entsprechend vergrößerte Fläche der auf den Magneten wirkende Druck vermindern.

Darüber hinaus ist es erfindungsgemäß, wenn die Ausformung gegenüber dem Randbereich einen konstanten Abstand aufweist, sodass der gewünschte Schutz der Magnetoberfläche gegenüber dem Stanzgrat unabhängig von der Montagerichtung gewährleistet ist.

Das Lamellenpaket könnte aus einer Vielzahl von Lamellen aufgebaut sein, die jeweils einen erfindungsgemäßen Halteabschnitt aufweisen. Als besonders praxisnah hat es sich jedoch bereits erwiesen, wenn das Lamellenpaket eine insbesondere regelmäßige Abfolge von jeweils mit und ohne einem Halteabschnitt ausgestatteten Lamellen aufweist, die in der zur Montage des Magneten vorbereiteten Position beabstandet zueinander angeordnet sind. Hierdurch wird eine unerwünschte Überlappung der Halteabschnitte verschiedener Lamellen zuverlässig vermieden, wobei die Kontaktflächen der jeweiligen Halteabschnitte in einer gemeinsamen Ebene angeordnet sind. Durch einen entsprechenden modularen Aufbau aus Lamellen mit und ohne Halteabschnitt kann eine problemlose Anpassung des Lamellenpaketes an unterschiedliche Magnete und Anforderungen an die erforderliche Haltekraft vorgenommen werden.

Die erfindungsgemäße Aufgabe wird weiterhin noch mit der Verwendung eines aus einer Vielzahl von übereinander geschichteten Lamellen gebildeten Lamellenpakets nach Anspruch 9 gelöst.

Hierdurch wird bereits konstruktiv ein ausreichender Abstand zwischen der Ebene der Randbereiche des Halteabschnittes, welcher fertigungsbedingt Stanzgrate aufweist, und der Ebene der Halte- bzw. Kontaktfläche für den Magneten sichergestellt, indem diese Halte- bzw. Kontaktfläche an der in Richtung des Magneten vorspringenden Ausformung angeordnet ist. Eine Berührung der Oberfläche des Magneten durch Stanzgrate ist daher ausgeschlossen, sodass die anderenfalls dabei oftmals auftretende Beschädigung zuverlässig vermieden werden kann.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
Fig. 1 eine perspektivische Darstellung eines Ausschnittes eines Lamellenpaketes mit darin eingesetzten Magneten;
Fig. 2 das in Figur 1 gezeigte Lamellenpaket ohne Magneten;
Fig. 3 eine vergrößerte Seitenansicht eines Halteabschnittes des in den Figuren 1 und 2 gezeigten Lamellenpaketes;
Fig. 4 eine vergrößerte Draufsicht auf den Halteabschnitt;
Fig. 5 eine perspektivische Ansicht einer Vorderseite einer Lamelle des in den Figuren 1 und 2 gezeigten Lamellenpaketes;
Fig. 6 eine perspektivische Ansicht einer Rückseite der in Figur 5 gezeigten Lamelle.

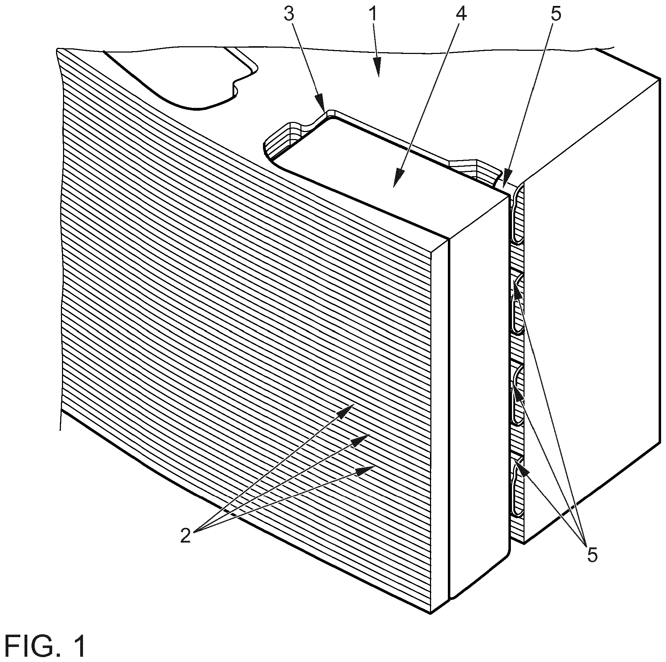

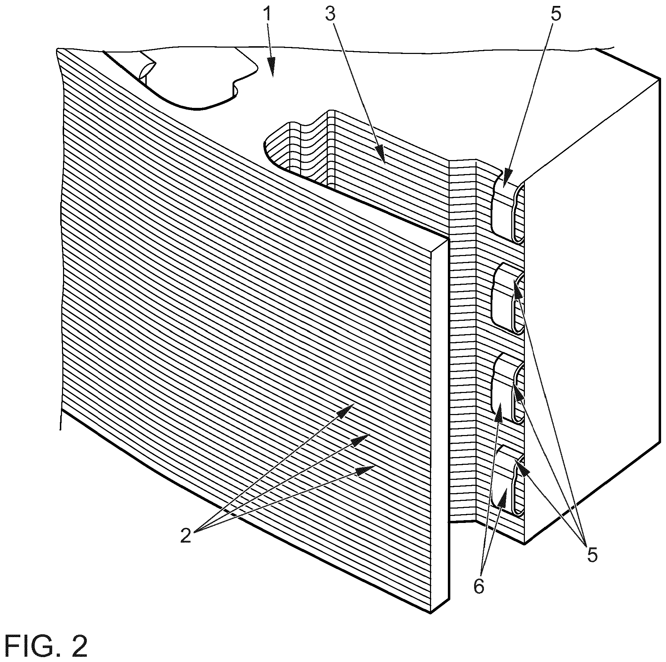

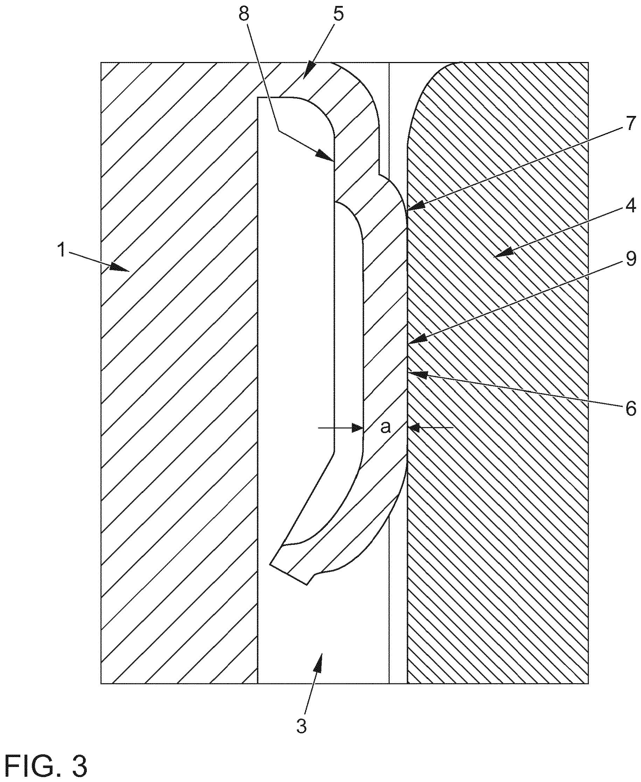

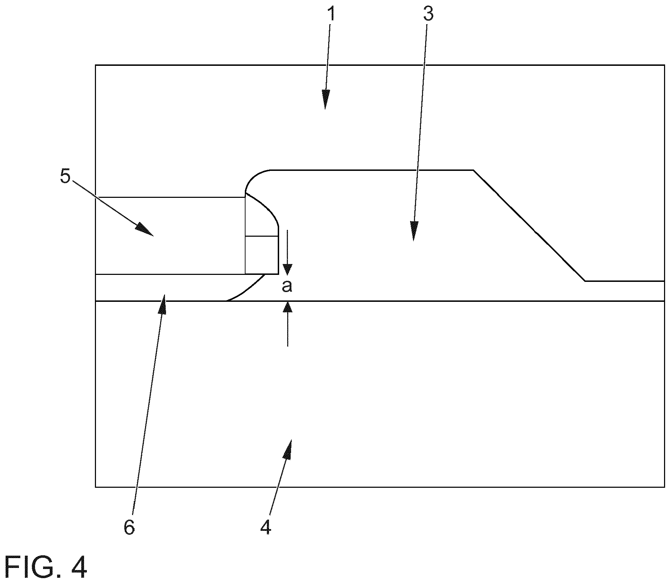

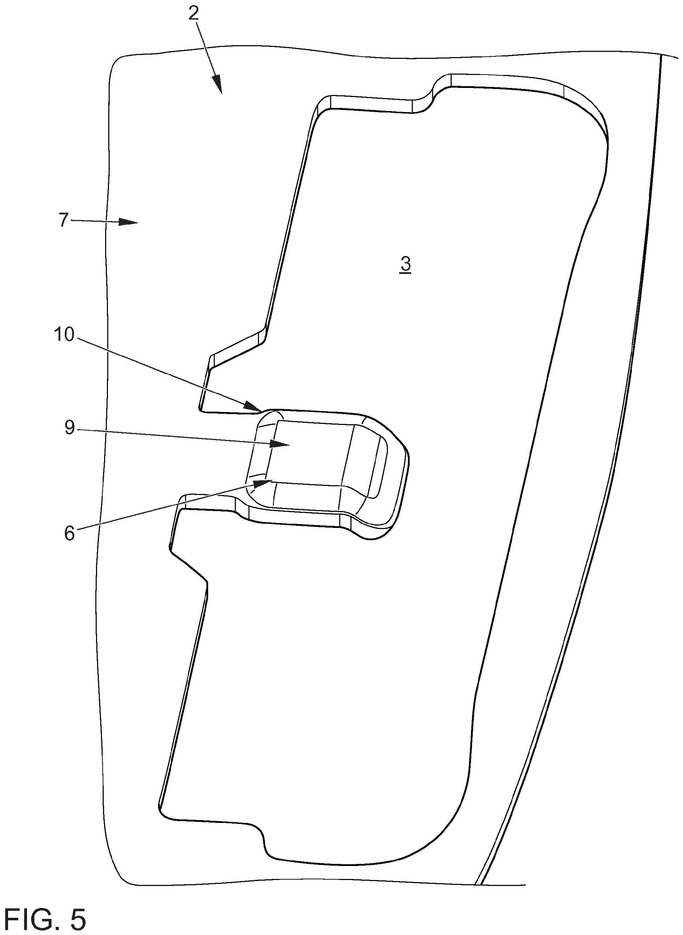

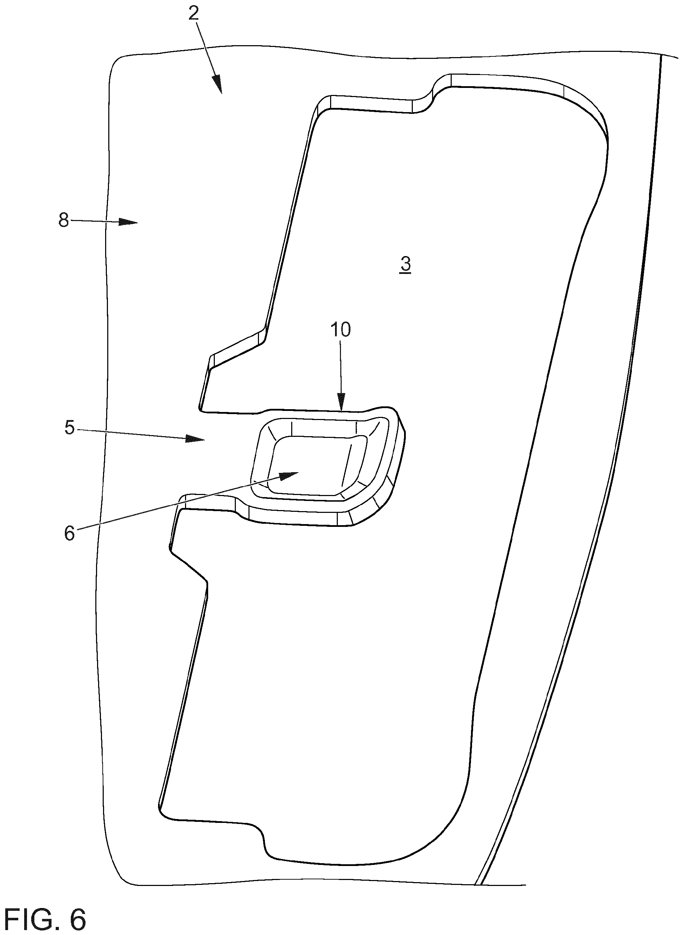

Ein für eine elektrische Maschine, insbesondere elektrische Antriebsmaschine eines Kraftfahrzeuges bestimmtes Lamellenpaket 1 wird nachstehend anhand der Figuren 1 bis 6 näher verdeutlicht. Das Lamellenpaket 1 besteht aus einer Vielzahl von übereinander geschichteten, als Blechzuschnitt ausgeführten Lamellen 2 und bildet beispielsweise einen Rotor der elektrischen Maschine. Das Lamellenpaket 1 hat eine Vielzahl konzentrisch angeordneter Ausnehmungen 3, in welcher in der betriebsbereiten Position jeweils ein Magnet 4 fixiert ist. Jeder Magnet 4 wird in der diesem zugeordneten Ausnehmung 3 form- und kraftschlüssig fixiert, indem einzelne der übereinander geschichteten Lamellen 2 mit einem jeweiligen Vorsprung ausgestattet sind, welcher einen elastisch verformbaren, durch eine Abbiegung gebildeten Halteabschnitt 5 aufweist Dieser Halteabschnitt 5 begrenzt die verfügbare Querschnittsfläche derart, dass der Magnet 4 entgegen der elastischen Rückstellkraft des Halteabschnittes 5 in die Ausnehmung 3 einsetzbar ist. Auf diese Weise begrenzt der Halteabschnitt 5 die Umfangskontur. Die Lamellen 2 sind in an sich bekannter Weise durch Stanzen hergestellt und weisen entlang der Stanzkontur einen nicht dargestellten Stanzgrat auf, welcher bei einem direkten Kontakt mit der Oberfläche des Magneten 4 zu einer Beschädigung führen kann. Um einer solchen Beschädigung vorzubeugen, hat jeder der im Ausführungsbeispiel vier Halteabschnitte 5 eine in Richtung der Ausnehmung 3 vorspringende Ausformung 6, die durch eine Prägekontur gebildet ist. Wie insbesondere in Figuren 1 bis 4 zu erkennen, wird so eine konvexe Oberseite 7 sowie konkave Unterseite 8 des jeweiligen Halteabschnittes 5 geschaffen, mit der Folge, dass eine Kontaktfläche 9 zwischen dem Halteabschnitt 5 und dem Magneten 4 einen Abstand a gegenüber einer durch einen Randbereich 10 des Halteabschnittes 5 definierten Ebene aufweist, welcher größer als die typischen Erstreckung von Stanzgraten bemessen ist. Somit wird in einfacher Weise ein unerwünschter Kontakt des Randbereiches 10 des Halteabschnittes 5 mit dem Magneten 4 wirkungsvoll vermieden, ohne dass hierzu eine Nachbehandlung der Stanzkontur erforderlich ist.

### Bezugszeichenliste

- 1: Lamellenpaket
- 2: Lamellen
- 3: Ausnehmung
- 4: Magnet
- 5: Halteabschnitt
- 6: Ausformung
- 7: Oberseite
- 8: Unterseite
- 9: Kontaktfläche
- 10: Randbereich
- a: Abstand

## Patentansprüche

1. Elektrische Maschine, insbesondere elektrische Antriebsmaschine mit einem aus einer Vielzahl von übereinander geschichteten, als Blechzuschnitt ausgeführten Lamellen (2) gebildeten Lamellenpaket (1), insbesondere für einen Rotor der elektrischen Maschine, wobei das Lamellenpaket (1) zumindest eine Ausnehmung (3) zur Fixierung zumindest eines Magneten (4) aufweist, wobei mehrere der übereinander geschichteten Lamellen (2) mit einem jeweiligen Vorsprung ausgestattet sind, welcher einen durch eine Abbiegung und/oder Abwinkelung gebildeten Halteabschnitt (5) aufweist, der in den Bereich der Ausnehmung (3) reicht, sodass der Magnet (4) in der Ausnehmung (3) kraft- und/oder formschlüssig fixiert ist, wobei der Halteabschnitt (5) eine gegenüber der Haupterstreckungsebene des abgewinkelten und/oder abgebogenen Halteabschnittes in Richtung der Ausnehmung gegenüber einem umfangsseitigen Randbereich (10) des Halteabschnittes (5) vorspringende Ausformung (6) mit einer gegen den Magneten anlegbaren Kontaktfläche (9) aufweist **dadurch gekennzeichnet, dass** die Kontaktfläche (9) der Ausformung (6) gegenüber einer durch den Randbereich (10) des Halteabschnittes (5) definierten Ebene entlang des Randbereiches (10) einen konstanten Abstand (a) aufweist..

2. Elektrische Maschine nach Anspruch 1, **dadurch gekennzeichnet, dass** die Ausformung (6) in Richtung der Ausnehmung (3) zumindest abschnittsweise konvex ausgeformt ist.

3. Elektrische Maschine nach den Ansprüchen 1 oder 2, **dadurch gekennzeichnet, dass** die Ausformung (6) durch eine Umformung zumindest eines von den Randbereich (10) eingeschlossenen Teilbereiches des Halteabschnittes (5) gebildet ist.

4. Elektrische Maschine nach zumindest einem der vorangehenden Ansprüche, **dadurch gekennzeichnet, dass** die Ausformung (6) durch Druckumformen, insbesondere Drücken oder Prägen, gebildet ist.

5. Elektrische Maschine nach zumindest einem der vorangehenden Ansprüche, **dadurch gekennzeichnet, dass** die Ausformung (6) eine im Wesentlichen polygonale, beispielsweise rechteckige Umfangskontur aufweist.

6. Elektrische Maschine nach zumindest einem der vorangehenden Ansprüche, **dadurch gekennzeichnet, dass** die Ausformung (6) eine gegen den Magneten (4) anlegbare ebene Kontaktfläche (9) aufweist.

7. Elektrische Maschine nach zumindest einem der vorangehenden Ansprüche, **dadurch gekennzeichnet, dass** das Lamellenpaket (1) eine insbesondere regelmäßige Abfolge von jeweils mit einem Halteabschnitt (5) ausgestatteten Lamellen (2) und von jeweils ohne einen Halteabschnitt ausgestatteten Lamellen (2) aufweist.

8. Elektrische Maschine nach zumindest einem der vorangehenden Ansprüche, **dadurch gekennzeichnet, dass** benachbarte Halteabschnitte (5) beabstandet zueinander angeordnet sind.

9. Verwendung eines aus einer Vielzahl von übereinander geschichteten Lamellen (2) gebildeten Lamellenpakets (1) einer elektrischen Maschine gemäß einem der vorangehenden Ansprüche bei einer elektrischen Maschine nach zumindest einem der vorangehenden Ansprüche, wobei der Halteabschnitt (5) eine gegenüber der Haupterstreckungsebene des abgewinkelten und/oder abgebogenen Halteabschnittes in Richtung der Ausnehmung gegenüber einem umfangsseitigen Randbereich (10) des Halteabschnittes (5) vorspringende Ausformung (6) mit einer gegen den Magneten anlegbaren Kontaktfläche (9) aufweist, **dadurch gekennzeichnet, dass** die Kontaktfläche (9) der Ausformung (6) gegenüber einer durch den Randbereich (10) des Halteabschnittes (5) definierten Ebene entlang des Randbereiches (10) einen konstanten Abstand (a) aufweist

## Claims

1. Electric machine, in particular electric drive machine, having a laminated core (1) formed from a multiplicity of laminations (2) which are stacked one on top of another and are configured as a sheet-metal blank, in particular for a rotor of the electric machine, wherein the laminated core (1) has at least one recess (3) for securing at least one magnet (4), wherein a plurality of the laminations (2) stacked one on top of another are provided with a respective protrusion which has a retaining portion (5) which is formed by bending and/or angling and reaches into the region of the recess (3) such that the magnet (4) is secured in a force-fitting and/or form-fitting manner in the recess (3), wherein the retaining portion (5) has a shaping (6) projecting in relation to the main plane of extent of the angled and/or bent retaining portion in the direction of the recess from a circumferential edge region (10) of the retaining portion (5) and having a contact surface (9) which can be placed against the magnet,
**characterized in that** the contact surface (9) of the shaping (6) is at a constant distance (a) along the edge region (10) from a plane defined by the edge region (10) of the retaining portion (5).

2. Electric machine according to Claim 1, **characterized in that** the shaping (6) is shaped convexly at least in portions in the direction of the recess (3) .

3. Electric machine according to Claims 1 or 2, **characterized in that** the shaping (6) is formed by reshaping at least one partial region of the retaining portion (5) that is enclosed by the edge region (10).

4. Electric machine according to at least one of the preceding claims, **characterized in that** the shaping (6) is formed by compression forming, in particular pressing or stamping.

5. Electric machine according to at least one of the preceding claims, **characterized in that** the shaping (6) has a substantially polygonal, for example rectangular, circumferential contour.

6. Electric machine according to at least one of the preceding claims, **characterized in that** the shaping (6) has a flat contact surface (9) which can placed against the magnet (4).

7. Electric machine according to at least one of the preceding claims, **characterized in that** the laminated core (1) has an in particular regular sequence of laminations (2) that are each provided with a retaining portion (5) and laminations (2) that are each provided without a retaining portion.

8. Electric machine according to at least one of the preceding claims, **characterized in that** adjacent retaining portions (5) are arranged spaced apart from one another.

9. Use of a laminated core (1) of an electric machine, said laminated core being formed from a multiplicity of laminations (2) stacked one on top of another, according to one of the preceding claims in an electric machine according to at least one of the preceding claims, wherein the retaining portion (5) has a shaping (6) projecting in relation to the main plane of extent of the angled and/or bent retaining portion in the direction of the recess from a circumferential edge region (10) of the retaining portion (5) and having a contact surface (9) which can be placed against the magnet, **characterized in that** the contact surface (9) of the shaping (6) is at a constant distance (a) along the edge region (10) from a plane defined by the edge region (10) of the retaining portion (5).

## Revendications

1. Machine électrique, notamment machine d'entraînement électrique, comprenant un paquet de lamelles (1) formé à partir d'une pluralité de lamelles (2) empilées les unes au-dessus des autres et réalisées sous la forme d'une pièce découpée en tôle, notamment pour un rotor de la machine électrique, le paquet de lamelles (1) possédant au moins un creux (3) servant à caler au moins un aimant (4), plusieurs des lamelles (2) empilées les unes au-dessus étant équipées d'une partie saillante respective, laquelle possède une portion de maintien (5) formée par une courbure et/ou un pliage, qui s'étend dans la zone du creux (3) de sorte que l'aimant (4) est calé dans le creux (3) par assemblage de force et/ou par complémentarité de formes, la portion de maintien (5) possédant un façonnage (6), pourvu d'une surface de contact (9) pouvant être appliquée contre l'aimant, qui fait saillie par rapport à une zone de bordure (10) côté pourtour de la portion de maintien (5) en direction du creux par rapport au plan d'extension principal de la portion de maintien courbée et/ou pliée, **caractérisée en ce que** la surface de contact (9) du façonnage (6) présente un écart (a) constant le long de la zone de bordure (10) par rapport à un plan défini par la zone de bordure (10) de la portion de maintien (5).

2. Machine électrique selon la revendication 1, **caractérisée en ce que** le façonnage (6), au moins dans certaines portions, est façonné de manière convexe en direction du creux (3).

3. Machine électrique selon la revendication 1 ou 2, **caractérisée en ce que** le façonnage (6) est formé par une déformation d'au moins une zone partielle de la portion de maintien (5) entourée par la zone de bordure (10).

4. Machine électrique selon au moins l'une des revendications précédentes, **caractérisée en ce que** le façonnage (6) est formé par déformation sous pression, notamment pressage ou estampage.

5. Machine électrique selon au moins l'une des revendications précédentes, **caractérisée en ce que** le façonnage (6) présente un contour périphérique sensiblement polygonal, par exemple rectangulaire.

6. Machine électrique selon au moins l'une des revendications précédentes, **caractérisée en ce que** le façonnage (6) présente une surface de contact (9) plane qui peut être appliquée contre l'aimant (4).

7. Machine électrique selon au moins l'une des revendications précédentes, **caractérisée en ce que** le paquet de lamelles (1) possède une séquence notamment régulière de lamelles (2) respectivement équipées d'une portion de maintien (5) et de lamelles (2) respectivement non équipées d'une portion de maintien.

8. Machine électrique selon au moins l'une des revendications précédentes, **caractérisée en ce que** les portions de maintien (5) voisines sont disposées espacées les unes des autres.

9. Utilisation d'un paquet de lamelles (1) d'une machine électrique selon l'une des revendications précédentes, formé à partir d'une pluralité de lamelles (2), avec une machine électrique selon au moins l'une des revendications précédentes, la portion de maintien (5) possédant un façonnage (6), pourvu d'une surface de contact (9) pouvant être appliquée contre l'aimant, qui fait saillie par rapport à une zone de bordure (10) côté pourtour de la portion de maintien (5) en direction du creux par rapport au plan d'extension principal de la portion de maintien courbée et/ou pliée, **caractérisée en ce que** la surface de contact (9) du façonnage (6) présente un écart (a) constant le long de la zone de bordure (10) par rapport à un plan défini par la zone de bordure (10) de la portion de maintien (5).
